# EUROPÄISCHE PATENTANMELDUNG

(11) **EP 2 196 298 A1**
(43) Veröffentlichungstag der Anmeldung: **16.06.2010**
(21) Anmeldenummer: 09015279.4
(22) Anmeldetag: 10.12.2009
(51) Int. Cl.: B29C 45/53, B29C 45/52

(54) **Plastifizier- und Einspritzaggregat mit Rückströmsperre**

(30) Priorität: 15.12.2008 DE 102008061845; 12.02.2009 DE 102009008590
(71) Anmelder: Klöckner Desma Elastomertechnik GmbH, 78567 Fridingen (DE)
(72) Erfinder: Krell, Volker, 78579 Neuhausen (DE); Küchler, Olaf, 78269 Volkertshausen (DE); Baumann, Edwin, 72365 Ratshausen (DE)
(74) Vertreter: Röther, Peter

(57) **Zusammenfassung**

Die Erfindung betrifft ein Plastifizier- und Einspritzaggregat in Spritzgießmaschinen zur Verarbeitung von polymeren Werkstoffen, beispielsweise Gummi, mit einer Plastifizierschnecke, die rotierbar in einem Schneckenzylinder angeordnet ist, welcher gleichzeitig den Einspritzkolben darstellt, der in einem Spritzzylinder axial verschiebbar angeordnet ist, wobei der Spritzzylinder über eine Düse mit dem Angusskanal eines Spritzgießwerkzeugs verbindbar ist und der Einspritzkolben über eine Rückströmsperre verfügt, das dadurch gekennzeichnet ist, dass die Schnecke mittels eines separaten Antriebs im Schneckenzylinder axial verschiebbar ist, die Schneckenspitze aus dem Schneckenzylinder vorsteht und einen Verschlusskörper mit einer Dichtfläche zur Anlage auf der Stirnfläche des Schneckenzylinders aufweist.

## Beschreibung

Die Erfindung betrifft ein Plastifizier- und Einspritzaggregat in Spritzgießmaschinen zur Verarbeitung von polymeren Werkstoffen, beispielsweise Gummi, mit einer Plastifizierschnecke, die rotierbar in einem Schneckenzylinder angeordnet ist, welcher gleichzeitig den Einspritzkolben darstellt, der in einem Spritzzylinder axial verschiebbar angeordnet ist, wobei der Spritzzylinder über eine Düse mit dem Angusskanal eines Spritzgießwerkzeugs verbindbar ist und der Einspritzkolben über eine Rückströmsperre verfügt.

Es handelt sich hierbei um Spritzeinheiten, die nach dem so genannten FIFO-Prinzip arbeiten (First in - First out). Während der Plastifizierphase (Befüllung des Spritzzylinders mit fließfähiger Spritzmasse durch Rotation der Plastifizierschnecke) wird ein Verbindungskanal vom Schneckenraum zum Spritzzylinder benötigt. Zum Füllen der Form muss im Spritzzylinder, vor allem bei zähflüssigen Elastomermassen, ein hoher Druck aufgebaut werden. Um dabei ein Zurückströmen der Spritzmasse in Richtung Schnecke zu verhindern, muss der beschriebene Verbindungskanal mit einem Rückschlagventil (Rückströmsperre) ausgerüstet sein.

Als Rückströmsperre wird bei bekannten Vorrichtungen nach dem Vorbild eines klassischen, hydraulischen Rückschlagventils ein frei bewegliches Teil (Kugel, Kegel oder ähnliches), welches in einem separaten Raum zwischen Schneckenspitze und Kolbenspitze im Einspritzkolben angeordnet ist, verwendet. Durch den Massedruck wird dieses Teil gegen einen Dichtsitz gepresst, wodurch der Verbindungskanal zum Schneckenraum verschlossen wird. Beim Plastifiziervorgang wird dieses bewegliche Teil durch den Massedruck in die entgegen gesetzte Richtung bewegt, wodurch der Verbindungskanal zur Kolbenöffnung hin geöffnet wird.

Wie gesagt befindet sich das bewegliche Teil in einem separaten Raum im Spritzkolben, wodurch ein relativ komplizierter Aufbau desselben bedingt ist. Der Kolben besteht aus vielen Einzelteilen mit empfindlichen Passungen, Dichtflächen und Feingewinden.

Der Spritzkanal vom Schneckenzylinder bis zum Kolbenausgang und der Raum für das bewegliche Teil kann sich natürlich im Betrieb durch aushärtendes Material verstopfen, so dass die Spritzeinheit des öfteren gereinigt werden muss. Wenn dies vernünftig geschehen soll, ist bei den konventionellen Konstruktionen eine Demontage zur Reinigung unumgänglich. Dabei müssen diese vielen Einzelteile sehr pfleglich behandelt werden. Kleinste Montagefehler (z. B. übersehene Schmutzpartikel oder mangelhafte Schmierung) führen schnell zu einem Versagen der gesamten Konstruktion. Nur durch genaueste Reinigung der Einzelteile und Bestreichen der Gewindeflanken mit Spezialfett kann eine akzeptable Lebensdauer erreicht werden. Die eigentlich erforderliche regelmäßige Reinigung der Spritzeinheit ist deshalb momentan sehr zeitaufwendig und riskant. Es droht eventueller Produktionsausfall. Daher werden heutzutage Spritzeinheiten viel zu selten gründlich gereinigt. Die hierdurch bedingten alten Ablagerungen, die aus der Spritzeinheit abplatzen und in die Formteile geraten, verursachen hohe Ausschussraten.

Der Erfindung liegt daher die Aufgabe zugrunde, ein Aggregat der eingangs genannten Art so auszugestalten, dass die Rückströmsperren-Einspritzkolbeneinheit einfach aufgebaut ist und der Reinigungsaufwand erheblich reduziert ist.

Die Erfindung löst diese Aufgabe gemäß dem kennzeichnenden Teil des Anspruchs 1 dadurch, dass die Schnecke mittels eines separaten Antriebs im Schneckenzylinder axial verschiebbar ist, die Schneckenspitze aus dem Schneckenzylinder vorsteht und einen Verschlusskörper mit einer Dichtfläche zur Anlage auf der Stirnfläche des Schneckenzylinders aufweist.

Der Verschlusskörper steht somit in den Spritzzylinder vor. Durch den axialen Antrieb wird beim Plastifizieren die Schnecke ein kurzes Stück in den Spritzkolben hinein geschoben, so dass das Material am Verschlusskörper vorbei strömen kann. Beim oder vor dem Spritzvorgang wird die Schnecke mittels des Antriebs wieder nach hinten gezogen, so dass die Dichtfläche des Verschlusskörpers auf der Stirnfläche des Schneckenzylinders aufliegt und ein Rückströmen des Materials verhindert wird. Es handelt sich hierbei also um eine aktive Rückströmsperre, bei der das bewegliche Verschlussteil bzw. Verschlusskörper im Gegensatz zu den bisher bekannten Konstruktionen nicht allein durch die Masseströmung bewegt wird, sondern durch einen zusätzlichen Antrieb. Die Neuerung besteht insbesondere in der Tatsache, dass die Schnecke hierbei gleichzeitig als "Schubstange" für den Verschlusskörper verwendet wird. Verschlusskörper und Schnecke bilden somit eine Einheit und können gemäß Anspruch 2 auch einteilig ausgebildet sein.

Der Hauptvorteil ist der einfache Aufbau im Bereich der Spritzmasse. Die gesamte Konstruktion besteht im wesentlichen aus zwei Einzelteilen. Anfällige Gewindeverbindungen und Passungen im Bereich des hohen Massedrucks (Spritzkolben/Spritzzylinder) sind nicht mehr erforderlich. Der Spritzkolben bzw. die Rückströmsperre muss zur gründlichen Reinigung nicht mehr demontiert werden, wodurch sich der Reinigungsaufwand erheblich reduziert und eine Beschädigung durch falsche Handhabung ausgeschlossen ist. Zudem wird durch die gezielte, kräftige und damit schnelle externe Betätigung eine Verringerung der Leckströmung erreicht. Das in die Form eingespritzte Volumen lässt sich somit wesentlich exakter dosieren. Um geringe Ausschussraten zu ermöglichen und um voll automatisch arbeitende Anlagen realisieren zu können, sind geringe Schwankungen des Einspritzvolumens zwischen den einzelnen Einspritzvorgängen überaus wichtig.

Die Erfindung wird im folgenden anhand der Figuren 1 bis 3 dargestellt, während in den Figuren 4 bis 5 der Stand der Technik dargestellt ist.

Es zeigen:
- Fig. 1: Plastifizier- und Einspritzaggregat
- Fig. 2: Schneckenzylinder mit Schnecke und Verschlusskörper in geöffneter Stellung
- Fig. 3: Vorrichtung gemäß Figur 2 in geschlossener Stellung
- Fig. 4: Schneckenzylinder und Einspritzkolben gemäß Stand der Technik in geöffneter Stellung
- Fig. 5: Vorrichtung gemäß Figur 4 in geschlossener Stellung
- Fig. 6: Vorrichtung gemäß den Figuren 4 und 5 in demontiertem Zustand.

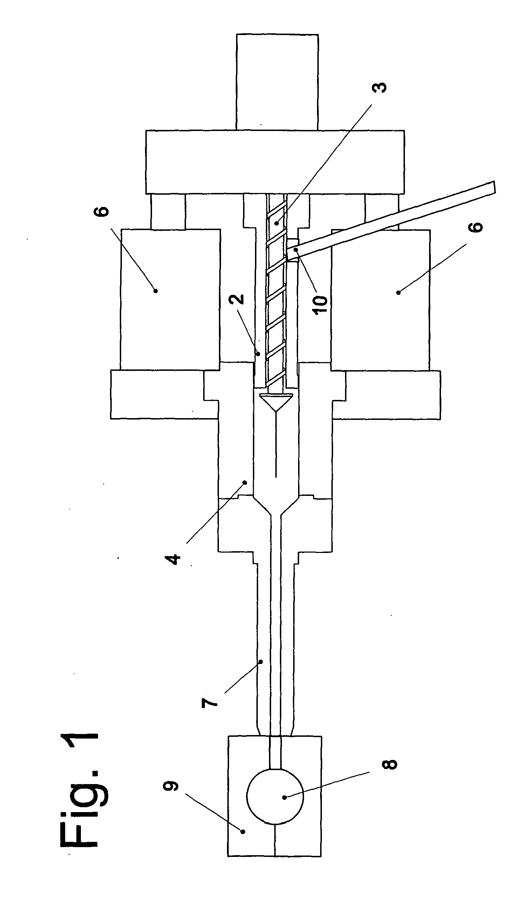

In der Figur 1 ist ein Plastifizier- und Einspritzaggregat dargestellt und allgemein mit dem Bezugszeichen 1 versehen.

Es besteht im wesentlichen aus einer rotierbar in einem Schneckenzylinder 2 angeordneten Plastifzierschnecke 3. Der Schneckenzylinder 2 dient als Einspritzkolben für die von der Schnecke 3 plastifizierte Masse, die im so genannten FIFO-Verfahren (First in - First out) in den Spritzzylinder gedrückt wird. Ist der Spritzzylinder 4 gefüllt, wird mittels der Hydraulikzylinder 6 der Schneckenzylinder in den Spritzzylinder hinein bewegt, wodurch die plastifizierte Masse aus dem Spritzzylinder über die Düse 7 in die Kavität 8 eines Spritzgießwerkzeugs 9 gedrückt wird.

Mit 10 ist im Schneckenzylinder der Einzugsschacht für das zu plastifizierende Material (Gummi) dargestellt.

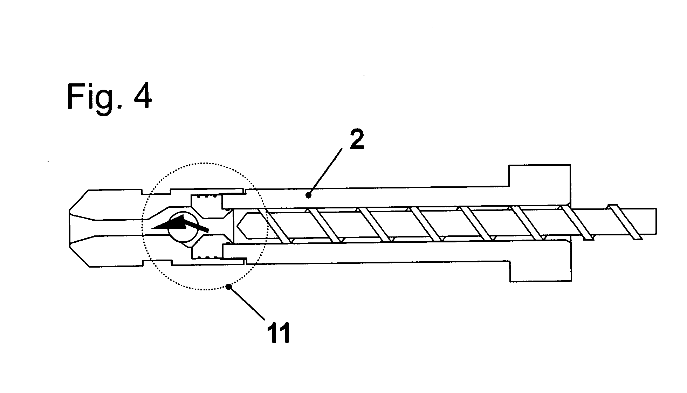

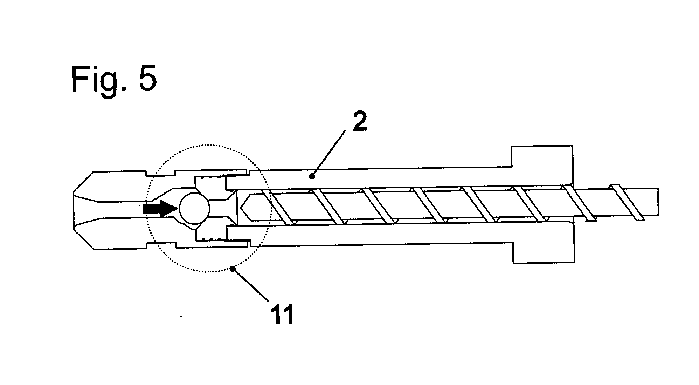

Im Stand der Technik gemäß den Figuren 4 bis 6 ist der Schneckenzylinder mehrteilig aufgebaut. Er besteht aus dem eigentlichen Zylinder zur Aufnahme der Schnecke und einem als Rückströmsperre 11 bezeichneten Bereich. Die Rückströmsperre besteht aus einem frei beweglichen Teil, in diesem Fall eine Kugel, die in einem speziell geformten Raum im Bereich vor der Schneckenspitze angeordnet ist.

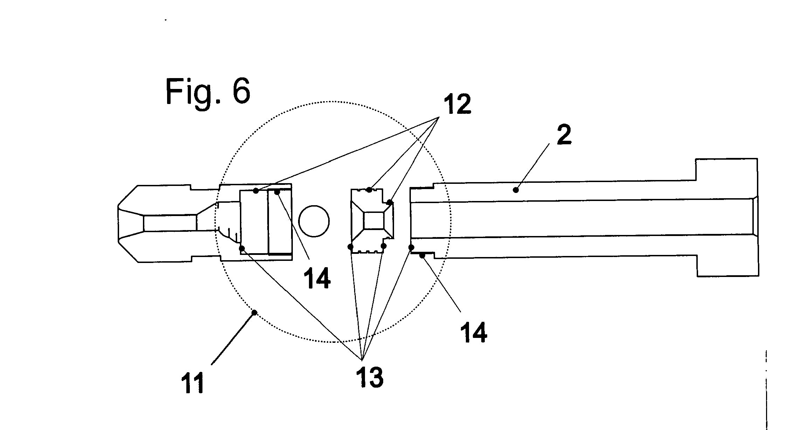

Wie besonders deutlich aus Figur 6 hervorgeht, ist der Aufbau der Rückströmsperre 11 recht fragil, da empfindliche Passungen 12 Dichtflächen 13 und Feingewinde 14 vorgesehen sind. Darüber hinaus ist auch die Formgebung des die Kugel aufnehmenden Raumes einigermaßen kompliziert.

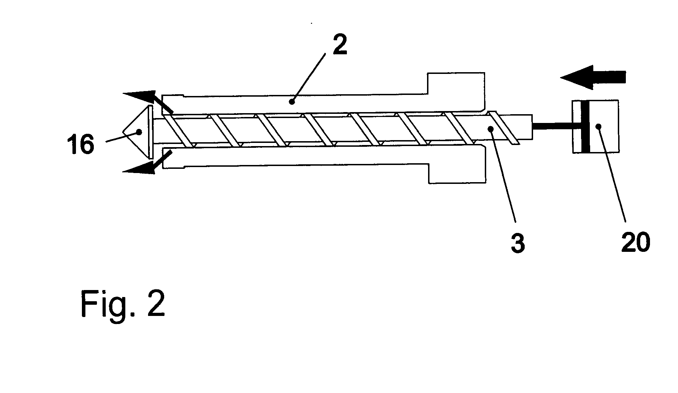

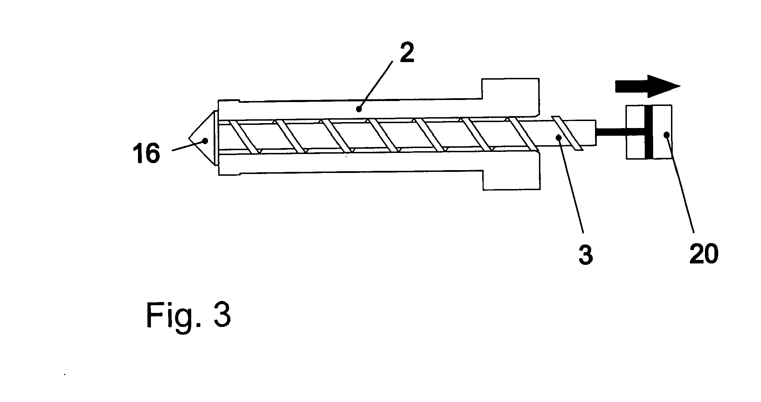

In den Figuren 1 bis 3 ist ein Plastifizier- und Einspritzaggregat der erfindungsgemäßen Art dargestellt.

Hier wird die Rückströmsperre von einem Verschlusskörper 16 gebildet, der den vorderen Teil der Schnecke bildet und in den Spritzzylinder hineinragt.

Die Schnecke ist hierfür mit einem Axialantrieb 20 versehen, der es ermöglicht, dass der Verschlusskörper vom Dichtsitz abheben kann und so den Weg für das plastifizierte Material in den Spritzzylinder freigibt.

Der Verschlusskörper ist im vorliegenden Ausführungsbeispiel als Konus ausgebildet, wobei die Konusbasis bzw. der verbleibende Randbereich als Dichtfläche dient, die in der Geschlossenstellung auf der vorderen Stirnseite des Schneckenzylinders aufliegt.

## Patentansprüche

1. Plastifizier- und Einspritzaggregat in Spritzgießmaschinen zur Verarbeitung von polymeren Werkstoffen, beispielsweise Gummi, mit einer Plastifizierschnecke, die rotierbar in einem Schneckenzylinder angeordnet ist, welcher gleichzeitig den Einspritzkolben darstellt, der in einem Spritzzylinder axial verschiebbar angeordnet ist, wobei der Spritzzylinder über eine Düse mit dem Angusskanal eines Spritzgießwerkzeugs verbindbar ist und der Einspritzkolben über eine Rückströmsperre verfügt,
**dadurch gekennzeichnet,**
**dass** die Schnecke (3) mittels eines separaten Antriebs (20) im Schneckenzylinder (2) axial verschiebbar ist, die Schneckenspitze aus dem Schneckenzylinder (2) vorsteht und einen Verschlusskörper (16) mit einer Dichtfläche zur Anlage auf der Stirnfläche des Schneckenzylinders (2) aufweist.

2. Plastifizier- und Einspritzaggregat nach Anspruch 1,
**dadurch gekennzeichnet,**
**dass** Schnecke (3) und Verschlusskörper (16) einteilig ausgebildet sind.

3. Plastifizier- und Einspritzaggregat nach Anspruch 1 oder 2,
**dadurch gekennzeichnet,**
**dass** der Antrieb (20) für die Axialverschiebung der Schnecke (3) ein Druckmittelzylinder ist.

4. Plastifizier- und Einspritzaggregat nach Anspruch 1 oder 2,
**dadurch gekennzeichnet,**
**dass** die Axialverschiebung der Schnecke (3) durch eine gewindegeführte Drehbewegung erfolgt.

5. Plastifizier- und Einspritzaggregat nach einem der Ansprüche 1 bis 4,
**dadurch gekennzeichnet,**
**dass** der Verschlusskörper (16) ein Konus ist, dessen Spitze in den Spritzzylinder (4) zeigt und der Rand der Konusbasis als Dichtfläche ausgebildet ist.
